Europäisches Patentamt

European Patent Office

Office européen des brevets

(19)

(11) Publication number: 0 346 001
A2

# EUROPEAN PATENT APPLICATION

(21) Application number: 89305518.6

(22) Date of filing: 01.06.89

(51) Int. Cl.⁴: C09D 5/18

(30) Priority: 08.06.88 DE 3819484

(43) Date of publication of application:
13.12.89 Bulletin 89/50

(84) Designated Contracting States:
CH FR GB IT LI NL

(71) Applicant: MINNESOTA MINING AND
MANUFACTURING COMPANY
3M Center, P.O. Box 33427
St. Paul, Minnesota 55133(US)

(72) Inventor: Goebell, Juergen K.H. c/o Minnesota
Mining and
Manufacturing Company 2501 Hudson Road
St. Paul Minnesota 55144-1000(US)

(74) Representative: Baillie, Iain Cameron et al
c/o Ladas & Parry Isartorplatz 5
D-8000 München 2(DE)

(54) Flame retardant coating.

(57) An intumescent aqueous emulsion paint is enhanced by adding alkali polysilicate granules which are substantially insoluble in water to increase the ability of the paint to form a protective char.

EP 0 346 001 A2

## FLAME RETARDANT COATING

The invention relates to an aqueous intumescent emulsion paint for formation of a flame retardant coating and coatings resulting from application of said paint.

It is known to coat a fire protecting material on parts. e.g. cable sleeves or cable pipes or other parts made of plastic, wood or steel or the like, which are endangered in case of fire. Preferably, a flame retardant material is used which expands when exposed to fire and is converted into a sealing crust-like material having a low heat conductivity.

A known intumescent flame retardant coating is capable of forming an insulating carbon containing foam layer over the material to be protected in case of fire, the thickness of the layer being large multiples of the original coating. The carbon foam layer provides effective protection against fire and heat and. furthermore, minimizes secondary damage, created by corrosive gases set free by burning cable. A known intumescent flame retardant agent in the form of a paint comprises an acid-forming compound, e.g. phosphor salts, which under the influence of heat sets free a non-volatile acid, which decomposes a polyhydroxyl compound, e.g. starch or pentaerithritol, into water carbon and carbon dioxide, and an expansion agent, for instance guanidine or melamine, effecting the foam-forming of the carbon decomposition products.

Optionally, pigments, binders and different activators can be added.

An example of such an intumescent paint is disclosed for instance in the U. S. patent No. 4,166,743, said composition comprising an ammonium polyphosphate as the acid-forming compound, dipentaerythritol and starch as the carbon sources and dicyandiamide as the expanding agent. However, a disadvantage of this composition is that the barrier layer formed in a fire can be easily affected or deteriorated by mechanical effects, such as shock produced by falling construction parts or by an air motion caused by fire As a consequence, the flame retardant capability is strongly reduced or eliminated.

This problem may be overcome in part by a flame retardant paint which contains, as disclosed in the German patent No. 28 07 697, thermosetting phenolic resins, which render increased stability to the carbon foam. A disadvantage of this paint is that phenolic resins are not suited as additive agents for water soluble paints; furthermore, phenolic resins also set free poisonous compounds like phenol or formaldehyde if heated.

## Summary of the Invention

An object of the present invention is to create a flame retardant coating produced from an intumescent aqueous emulsion paint which under the influence of heat forms in a non-toxic manner a carbon containing foam which is relatively resistant to mechanical effects.

This object is attained by adding alkali polysilicate granules to the emulsion paint which are substantially insoluble in water.

## Description of the Preferred Embodiments

Several flame retardant agents are already known which contain hydrated alkali polysilicate in form of granules. Alkali polysilicates are also very well suited as intumescent components of flame retardant paints as they tend to swell up to a multiple of their original size by absorption of water molecules between the silicon-oxygen layers. U.S. Patents Nos. 4,273,879 and 4,521,333, for instance disclose different flame retardant composite materials which contain alkali polysilicates in the form of granules which function only as an intumescent component. U.S. patents Nos. 4,273,879 and 4,521,333 are assigned to the assignee of the present invention and are incorporated by reference.

In order to facilitate processing or increase the durability of the granules, it is further known to provide the polysilicate granules with a water-repellent cover or coating which functions to prevent a premature solubilization of the granules. For example, the US. patent No. 4,218,502 discloses the use of polysilicate granules in asphalt roofing materials, wherein the polysilicate granules are covered with a coating consisting of a metal soap and in ionizable compound of the same metal, for instance a hydroxide or a chloride. In the present of water, a metal cation is formed in the coating, which reacts with the polysilicate ion to produce a reaction product of reduced solubility in water.

However, it is not known to add substantially insoluble polysilicate granules to aqueous flame retardant paints.

In contrast to the above mentioned prior art, in the invention the alkali polysilicate is not added to the aqueous emulsion paint because of its intumescent effect. The paint already contains all the necessary components which cause the formation of an insulating carbon containing foam in the presence of fire so that the addition of a further intumescent component, in this case the alkali polysilicate, is not required.

Surprisingly, it has been discovered that aqueous intumescent emulsion paints which contain alkali polysilicate in the form of granules will form a much more erosion resistant carbon containing foam in the present of fire than paints without alkali polysilicate The carbon containing foam formed upon exposure to heat or fire based on an emulsion paint containing polysilicate granules has a much greater resistance to erosion and does not produce poisonous gases as in the case with organic foam-forming compositions which contain phenolic resins. Furthermore, the water set free from the hydrated silicate additionally contributes to cooling a surface in case of fire.

However, to render possible these desired effects permanently with aqueous emulsion paints one has to take care that the normally water-soluble alkali polysilicate does not dissolve in the paint. According to the invention, this is achieved by polysilicate granules which are only slightly soluble in water, or preferably by polysilicate granules which are provided with a water repellent coating. Suitable hydrophobizing agents are for instance waxes or paraffin; the hydrophobizing is carried out by known methods.

The preferred protective coating, providing the longest-lasting and most thorough moisture protection, comprises a metal salt of a long-chain fatty acid. Stearic acid is the preferred long-chain fatty acid but others, such as oleic or palmitic acid, can also be used Also, although calcium is a preferred metal, other metals, such as the alkaline-earth metals barium and magnesium, and aluminum and zinc, can be used.

In preferred coatings as just described, the best water-stability has been obtained when the coating includes metal, in an ionizable compound, in excess of that need for stoichiometric association with the anion of the long-chain fatty acid. The excess metal of such metal-cation-rich coatings can be provided, for example, ad the hydroxide, carbonate, chloride, or fluoride of the metal. Typically the excess-metal-providing ionizable compound, which is desirably present in an amount accounting for at least one-half volume-percent of the protective coating, is more soluble than the metal salt of the long-chain fatty acid.

Other water-insoluble components can be included in protective coatings of the invention, either as a supplement or as a substitute for the metal salt of a long-chain fatty acid. For example, organic polymeric films such as polyethylene, polypropylene, wax, epoxy resins, or urethane resins may be used. An ionizable ingredient providing metal cation for reaction with silicate ion of the core particle should be included in such coatings to obtain the best water-stability.

A further ingredient preferably included in protective coatings on parties of the invention is silicone water-repellent agents. A large list of such agents are known to repel moisture from a surface on which they are applied. Use of such a repellent coating has been found to add significantly to the moisture-resistance provided by the protective coating.

The long-term stability of coated particles of the invention has been demonstrated both in extended aging tests on test decks, and by accelerated laboratory tests in which the particles are totally immersed in water and their intumescability measured at various intervals. In the latter kind of testing, for example, sodium silicate particles as described in Example 1 below, after having been immersed in water for 40 days, still exhibit useful intumescence upon heating. When sodium silicate particles the same as those of Example 1, but without any protective coating, are subjected to the same test, they will intumesce at all after 1-3 days of exposure. Also, when sodium silicate particles the same as those of Example 1 except coated with calcium stearate in which the calcium and stearate are in stoichiometric proportions are subjected to the same testing, intumescence of the particles declines after 66 to 9 days to the level exhibited by particles of Example 1 after 40 days of exposure.

The protective coating on coated particles can be applied by known coating procedure. For example, the core particles can be mixed with the coating material while the latter is in a liquid form, e.g. by melting or dissolving. The coating is then allowed to harden to a substantially continuous film, as by cooling, drying or reacting. In one useful coating operation, the core particles are first coated with a liquefiable portion of the coating - e.g. melted stearic acid; oleic acid, which is liquid at room temperature; molten polymer such as polyethylene; or a liquid uncured epoxy resin-hardener composition. Then, before the coating has cooled or hardened, other ingredients such as the metal-cation-supplying ingredient are added, as by mixing a powdered form of that ingredient and the coated core particles. For example, powdered calcium hydroxide is conveniently mixed with particles that have been first coated with molten stearic acid. After such mixing, the calcium hydroxide becomes partially embedded in the stearic acid coating; the calcium reacts with the stearic acid to form nearly insoluble calcium stearate; and any unreacted calcium hydroxide remains present in the layer to provide excess calcium cation for a self-healing function.

A further modification of the invention provides that the composition of the granules additionally comprises a borate, for instance a zinc borate, in a quantity that the molar ration of boron to alkali metal ranges between about 0.2 to about 0.9.

Suitably alkali polysilicates used according to the invention may be, for instance, sodium or potassium but also lithium polysilicate. The structure of the polysilicate is represented by the formula $M_2O:xSiO_2$ in which M is the alkali metal and x ranges from about 1.5 to about 4.0.

Furthermore, the granules may comprise water in a range of 5 to 15% by weight.

According to an embodiment of the invention, the quantity of silicate granules added to the coating varies between 5 to 50% by weight, preferably however, between 15 to 50% by weight.

An example for a coating according to the invention:
17% by weight water
17% by weight emulsion additives
4% by weight titanium dioxide
11% by weight pentaerythritol
11% by weight phosphor salts
17% by weight dicyandiamide
16% by weight emulsion paint
30% by weight alkali silicate granules

Examples for the composition of the granules:
57% by weight sodium polysilicate of the formula $Na_2O:xSio_2$ (x = 2.8) and
43% by weight zinc borate of the formula $3ZnO:2B_2O_3$;
62% by weight potassium silicate of the formula $K_2O:xSiO_2$ (x = 2.8) and
38% by weight zinc borate of the formula cited above;

For all examples the diameter of the granules has been chosen in a range of about 300 to about 840 $\mu$m. The hydrophobizing agent was wax.

## Claims

1. An aqueous intumescent emulsion paint for flame retarding purposes including acid-forming compounds in the form of inorganic salts of a non-volatile acid, polyhydroxyl compounds which are decomposed to carbon, water and carbon dioxide by acid and heat, an expanding agent which effects the foam forming of the carbon decomposition products and thermoplastic binder, characterised by containing substantially insoluble alkali polysilicate granules.

2. A paint according to claim 1, wherein the composition of the granules additionally comprises borate in a quantity that the molar ratio of boron to alkali metal ranges between 0.2 and 0.9.

3. A paint according to either of claims 1 and 2, wherein said alkali polysilicate granules are represented by the formula $M_2O:SiO_2$ in which M is the alkali metal and x ranges from about 1.5 to about 4.

4. A paint according to any one of claims 1 to 3, wherein said granules are provided with a water repellant coating.

5. A paint according to claim 4, wherein said water repellant coating consists of paraffin or wax.

6. A paint according to any one of claims 1 to 5, wherein said alkali polysilicate granules are sodium or potassium polysilicate granules.

7. A paint according to claim 6, wherein said granules are lithium polysilicate.

8. A flame retardant coating obtained by application of a paint according to any one of claims 1 to 7.